# DEMANDE DE BREVET EUROPEEN

(11) **EP 1 521 448 A1**
(43) Date de publication de la demande: **06.04.2005**
(21) Numéro de dépôt: 04300631.1
(22) Date de dépôt: 28.09.2004
(51) Int. Cl.: H04N 1/21, H04N 1/41

(54) **Procédé de gestion de la prise de photos numériques**

(30) Priorité: 01.10.2003 FR 0350627
(71) Demandeur: SAGEM SA, 75015 Paris (FR)
(72) Inventeur: Le BARTZ, Jean-Luc, 95280, JOUY-LE-MOUTIER (FR); GOMMIER, Sylvain, 75017, PARIS (FR)
(74) Mandataire: Camus, Olivier Jean-Claude

(57) **Abrégé**

Dans l'invention, on propose une automatisation d'une opération de captures d'images au moyen d'un équipement photographique intégré dans un dispositif de type téléphone mobile, afin d'essayer d'anticiper une taille de fichier électronique créé suite à la prise d'une photo. Cette opération consiste à capturer régulièrement et automatiquement, à partir de la détection d'un événement particulier, des images donnant naissance à un fichier numérique intermédiaire contenant des données compressées. En fonction du résultat obtenu pour la taille du fichier intermédiaire, on procède à un ajustement d'un ensemble de paramètres intervenant dans les opérations de compression; les paramètres ajustés sont, dans un mode de mise en oeuvre préféré du procédé selon l'invention, les tables de quantification intervenant dans les opérations d'encodage.

## Description

La présente invention a pour objet un procédé de gestion de la prise de photos numériques. Plus particulièrement, l'invention propose un procédé qui permet de contrôler la taille d'un fichier numérique créé à chaque prise de photo au moyen d'un appareil photographique numérique. Le procédé selon l'invention est particulièrement adapté pour être mis en oeuvre dans des dispositifs ou équipements qui présentent des moyens de prise de photos numériques classiques (capteur, ensemble optique, moyens de compression de données...) mais dont la taille de chaque espace mémoire, contenu dans un module mémoire de l'équipement considéré et qui est réservé pour mémoriser une unique photo est rigoureusement limitée. De tels équipements sont par exemple des téléphones mobiles.

Le domaine de l'invention est, d'une façon générale, celui de la photographie numérique. Dans ce domaine, les éléments physiques constitutifs d'une photo prise par un utilisateur ne sont plus retenus sur un support de type pellicule, mais sont mémorisés dans un fichier électronique ; les photos mémorisées le sont donc sous forme de données numériques, et la visualisation des fichiers qui les contiennent nécessite l'utilisation d'un logiciel approprié capable d'ouvrir les fichiers électroniques en question, et capable d'interpréter correctement les données numériques qu'ils contiennent pour restituer sur un écran les photos correspondantes.

Dans les appareils photographiques numériques qui sont exclusivement dédiés à la prise de photographies, des modules de mémoire externes, se présentant sous la forme de cartes, peuvent être insérés dans des emplacements spécifiques du boîtier de l'appareil photographique numérique; différents standards existent à ce jour. Le prix de ces cartes dépend de leur quantité de mémoire disponible. Le plus souvent, l'utilisateur de tels appareils est informé, sur un écran LCD de contrôle incorporé dans l'appareil photographique, du nombre de photos qu'il est encore en mesure de mémoriser sur sa carte mémoire, ce nombre de photos dépendant notamment d'un niveau de qualité qu'il a manuellement choisie.

Le nombre de photos restantes indiqué n'est cependant qu'informatif : il est calculé à partir d'un espace mémoire encore disponible sur la carte mémoire et de l'espace mémoire moyen occupé par une photographie avec le niveau de qualité choisi. Or ce niveau de qualité est directement associé à des caractéristiques de codage des informations relatives aux photographies mémorisées, comme il l'est à présent expliqué.

Les données codant les images photographiées sont, après que l'image a été transposée dans un espace fréquentiel, et préalablement à la leur mémorisation, compressées afin d'occuper un espace mémoire moins important. L'opération de compression fait intervenir un algorithme de compression de données, qui aboutit à la création de fichiers, dits fichiers compressés, où les données sont stockées dans un format standard, par exemple le format JPEG ou tout autre format spécifique à un fabricant d'appareils photographiques numériques.

L'algorithme de compression fait notamment appel à des tables de quantification, qui déterminent un ensemble de règles de compression en imposant une correspondance entre différentes fréquences spatiales et un nombre de bits autorisés pour la mémorisation des données associées à chaque fréquence considérée. Par exemple, on peut prévoir, dans une table de quantification donnée, de réserver quatre bits pour une information haute fréquence, et deux bits pour une information basse fréquence. Les informations haute fréquence caractérisent, dans l'espace fréquence où elles ont été transposées, des zones d'image où des variations importantes de couleur et/ou de forme sont présentes, et les informations basse fréquence caractérisent des zones d'image où les couleurs et les formes présentes dans ces zones varient peu.

En conséquence, deux images photographiées au moyen d'un appareil photographique numérique peuvent aboutir, pour un même niveau de qualité choisi, à des fichiers électroniques, mémorisant les informations relatives à ces deux images, de taille très variable. La mémorisation d'une image d'un vêtement bigarré nécessite un espace mémoire plus important que la mémorisation d'une image d'un décor uniforme. Lorsqu'un utilisateur prend une photo au moyen d'un équipement photographique numérique, il ne peut donc jamais connaître à l'avance la taille du fichier qui sera associé à cette photo. L'information apparaissant sur les écrans LCD est donc une information statistique qui ne correspond pas nécessairement à la réalité. Ainsi, un utilisateur peut ne pas voir cette information varier lorsqu'il a pris une photo présentant peu de détails ; à l'inverse, il constatera que le nombre affiché diminuera plus rapidement que le nombre de photos qu'il prend si l'objet de ces photos est complexe.

Dans le cadre d'une utilisation de cartes de mémoires externes, ce fonctionnement n'est pas particulièrement gênant. En effet, l'utilisateur est quasiment toujours assuré de pouvoir prendre la photo qu'il souhaite quand il le souhaite, l'espace mémoire des cartes n'étant pas compartimenté avec des tailles limites réservées pour chaque photographie. La seule difficulté qu'il peut rencontrer réside dans la prise de la dernière photographie, l'espace encore disponible sur la carte mémoire risquant d'être insuffisant pour mémoriser le fichier associé à la dernière photo. Certains fabricants d'appareils photographiques numériques résolvent ce problème en conservant une marge dans l'utilisation de la carte, en réservant les derniers kilo-octets des cartes mémoire au stockage d'éventuelles informations excédentaires d'une dernière photographie, les informations excédentaires correspondant à la différence entre la taille réelle du fichier associé à la dernière photographie et la taille moyenne d'un fichier.

Cependant, il existe d'autres modes d'utilisation où l'impossibilité de prévoir la taille d'un fichier électronique associé à une photographie est nettement plus gênante. C'est notamment le cas de dispositifs sophistiqués qui, en plus de leur fonctionnalité initiale, offrent la possibilité de prendre numériquement des photographies. C'est typiquement le cas de certains téléphones mobiles ou de certains PDA.

Dans les téléphones mobiles, par exemple, on utilise un module de mémoire particulier pour mémoriser les photos numériques, ledit module étant intégré dans un bloc mémoire complexe où sont mémorisées différentes données relatives au fonctionnement du téléphone. Le module de mémoire particulier est compartimenté : il est divisé en un ensemble de cellules de taille fixe, chacune de ces cellules étant destinée à recevoir les données compressées d'une unique photographie. Les données relatives à une photographie ne peuvent pas être mémorisées dans deux cellules différentes. En conséquence, les fichiers contenant les données compressées doivent être limités en taille sous peine de ne pas pouvoir être mémorisés. Une autre raison de limiter la taille des fichiers associés à des photos numériques, outre les raisons structurelles qui viennent d'être évoquées, est que les fichiers doivent pouvoir être transmis, via le réseau de radiotéléphonie cellulaire associé au téléphone mobile considéré, sous la forme de messages particuliers de type MMS dont la taille est par définition limitée. Une photographie donnant naissance à un fichier de taille trop importante ne sera donc pas mémorisée. Les tailles limites proposées par les différents constructeurs de téléphones mobiles sont de l'ordre de 50 kilo-octets.

Ce mode de fonctionnement peut s'avérer particulièrement dérangeant pour un utilisateur d'un téléphone mobile intégrant un appareil photographique numérique et qui souhaite utiliser cette fonctionnalité. En effet, dans le cas de figure précédemment mentionné, lorsqu'il souhaite prendre une photo donnant naissance à un fichier de taille trop importante, il reçoit un message, par exemple sur un écran LCD intégré dans son dispositif, lui indiquant que la photo n'a pas pu être prise, et l'invitant parfois à renouveler sa tentative. En effet, dans le contexte d'une prise de photo, la mémoire limitée ne permet pas de conserver une copie intégrale et non compressée de l'image, dont le flux de données est alors encodé immédiatement. Mais, d'une part, l'objet de la photographie refusée peut ne plus être disponible, et, d'autre part, si ce dernier est encore disponible, il y a de fortes chances que le même problème se reproduise.

### ARRIERE-PLAN TECHNOLOGIQUE DE L'INVENTION

Certains constructeurs de téléphones mobiles ont tenté de répondre à ce problème. Dans l'état de la technique, on connaît notamment une première solution consistant à utiliser des capteurs optiques de qualité moyenne, le nombre d'informations relatives à chaque image à mémoriser étant ainsi, de fait, moins important qu'avec un capteur de bonne qualité. Avec cette approche, c'est donc la qualité de toutes les photos prises qui se trouvent détériorée. Une deuxième solution consiste à choisir des tables de quantification sévères, c'est à dire qui associent un nombre réduit de bits aux différentes fréquences à coder. C'est donc l'efficacité de la compression qui est favorisée ; mais, là encore, ces opérations s'effectuent au détriment de la qualité des photos prises : les pertes d'informations sont en effet plus importantes lorsque des tables de quantification sévères sont utilisées dans les opérations de compression de données. L'image restituée est donc systématiquement de qualité médiocre.

Le domaine de la vidéo numérique a été également confronté à des problèmes de mémorisation de données relatives à des séquences vidéo dans des supports de taille fixe. Les données relatives à des séquences vidéo doivent également être compressées avant d'être mémorisées sur différents supports, par exemple des vidéo disques. On connaît notamment les demandes de brevet publiées sous les numéros EP 0 802 682, US2002/0131765 et EP 0 584 991 qui proposent des solutions pour enregistrer des programmes vidéo, de durée déterminée, sur des disques optiques ayant, par définition, une capacité de mémorisation fixe. Dans ces documents, on propose notamment de contrôler une unité de compression MPEG intervenant dans le codage des données de façon à modifier, au cours de l'enregistrement, un taux de codage des données.

Mais les solutions proposées dans ces documents ne sont pas transposables au domaine de la photographie numérique. En effet, les domaines techniques considérés sont éloignés et des contraintes, qui n'existent pas dans le domaine de la vidéo numérique, sont incontournables dans le domaine de la photographie numérique : ainsi, le fait que c'est une succession d'images organisées en séquences vidéo, et l'animation qui en résulte, qui intéresse un utilisateur d'appareils de vidéo numérique dispense de soigner la qualité de chaque image défilant dans la vidéo, les défauts de qualité, s'il ne concernent que quelques images consécutives, n'étant pas visibles lors de la diffusion de la vidéo.

Dans l'état de la technique, pour résoudre les problèmes de mémorisation de données vidéo, on peut donc utiliser directement des informations de taille de fichiers précédemment mémorisés, correspondant à des données sur des images constituant des séquences précédentes, pour contrôler par la suite un taux de compression à appliquer aux images suivantes d'une séquence considérée. On profite avantageusement du fait que deux images successives d'une même séquence vidéo sont quasiment identiques pour anticiper la taille des fichiers électroniques qui vont être créés. Le taux de compression n'est donc pas nécessairement optimal pour les séquences précédemment mémorisées, et il ne le sera peut-être pas pour les séquences à venir si l'on vient à manquer d'espace mémoire, mais ce n'est pas un réel problème dans le cadre de la vidéo.

Par contre, dans le cadre de la photographie numérique, c'est précisément chaque image photographiée qui intéresse individuellement l'utilisateur ; la qualité doit donc être optimale. Par ailleurs, dans le domaine de la photographie numérique, il n'est pas intéressant d'analyser les tailles des fichiers associés à des photos prises précédemment mémorisés pour tenter de modifier des paramètres de compression afin d'optimiser la taille des fichiers, puisque la probabilité qu'il existe une corrélation entre deux photos successives est faible.

### DESCRIPTION GENERALE DE L'INVENTION

Le procédé selon l'invention propose une solution aux problèmes et inconvénients qui viennent d'être exposés. Dans l'invention, on garantit qu'une photo prise par un utilisateur d'un dispositif, par exemple un téléphone mobile, équipé d'un appareil photographique numérique et dont le module de mémoire destiné à mémoriser les fichiers associés aux photos est compartimenté, sera effectivement mémorisée au sein du dispositif considéré, avec une qualité optimale pour l'espace mémoire disponible.

A cet effet, on cherche, dans le procédé selon l'invention, à anticiper la taille des fichiers numériques générés par la prise de photos. Dans l'invention, on propose une automatisation d'une opération de captures d'images. Cette opération consiste à capturer régulièrement et automatiquement, à partir de la détection d'un événement particulier, des images au moyen de l'équipement photographique du dispositif considéré ; chaque image capturée est encodée ; un fichier numérique intermédiaire, ou temporaire, contenant les données compressées de l'image capturée encodée, est créé et mémorisé dans une mémoire vive du dispositif, et la taille du fichier numérique intermédiaire est déterminée.

En fonction du résultat obtenu pour la taille du fichier intermédiaire, on peut procéder à un ajustement d'un ensemble de paramètres intervenant dans les opérations de compression; l'ajustement est réalisé de telle sorte que si la photo, dont la détermination de la taille du fichier intermédiaire a entraîné l'opération d'ajustement, était de nouveau prise, la taille du fichier intermédiaire correspondant tendrait vers une valeur maximale de taille de fichier préalablement déterminée. Afin de respecter prioritairement le non dépassement de la valeur maximale, on peut privilégier, dans l'invention, une diminution de la taille des fichiers par rapport à la qualité des images mémorisées quand la taille des fichiers intermédiaires s'approche de la valeur maximale tout en demeurant supérieure à cette valeur.

Les paramètres ajustés sont, dans un mode de mise en oeuvre préféré du procédé selon l'invention, les tables de quantification intervenant dans les opérations d'encodage. Ils pourraient, dans d'autres exemples de mise en oeuvre, être le nombre de capteurs actifs pour réaliser la photographie. On peut alors parler d'ajustement dynamique des tables de compression JPEG quand c'est ce dernier format de compression qui est utilisé.

L'invention concerne donc essentiellement un procédé de gestion de la prise de photographies numériques au moyen d'un dispositif intégrant notamment un appareil photographique numérique, caractérisé en ce que le procédé comporte les différentes étapes consistant à :
- détecter un événement particulier subi par le dispositif ;
- capturer automatiquement une succession d'images au moyen de l'appareil photographique numérique intégré dans le dispositif;
- pour chaque image automatiquement capturée, déterminer une taille d'un fichier numérique correspondant à l'image capturée considérée, et ajuster, en fonction au moins d'une valeur seuil maximale de taille de fichier numérique, un ensemble de paramètres intervenant sur la taille des fichiers numériques créés suite à la capture d'une image, pour la capture d'une image suivante.

Le procédé selon l'invention peut comporter une ou plusieurs caractéristiques supplémentaires, parmi les suivantes:
- l'événement particulier détecté est une opération de sélection, au sein du dispositif considéré, d'un mode de prise de photographies.
- l'événement particulier détecté est une opération d'ouverture d'un cache obturateur d'un capteur de l'appareil photographique numérique.
- l'événement particulier détecté est une pression sur un déclencheur de l'appareil photographique numérique pour effectuer une mise au point.
- les paramètres ajustés sont des valeurs intervenant dans des tables de quantification utilisées dans une opération de compression pour créer un fichier numérique à partir de chaque photographie prise.
- l'étape d'ajustement de l'ensemble de paramètres intervenant sur la taille des fichiers numériques créés suite à la capture automatique d'une image comporte une opération de changement de table de quantification, ladite opération consistant à choisir une autre table de quantification, parmi un ensemble de tables de quantification préalablement mémorisées dans le dispositif, que celle utilisée pour capturer l'image considérée, chaque table de quantification correspondant à un niveau de qualité de compression particulier.
- l'ensemble des tables de quantification préalablement mémorisées est constitué de sept tables de quantification distinctes.
- l'étape d'ajustement de l'ensemble de paramètres intervenant sur la taille des fichiers numériques créés suite à la capture automatique d'une image consiste à choisir, lorsque la taille du fichier numérique correspondant à l'image considérée est supérieure à la valeur seuil maximale de taille de fichier numérique, une table de quantification, dans l'ensemble de tables de quantification préalablement mémorisées, dont la qualité de compression est inférieure de deux niveaux par rapport au niveau de qualité de compression de la table de quantification utilisée pour capturer automatiquement l'image considérée.
- l'étape d'ajustement de l'ensemble de paramètres intervenant sur la taille des fichiers numériques créés suite à la capture automatique d'une image consiste à choisir, lorsque la taille du fichier numérique correspondant à l'image considérée est inférieure à une valeur seuil minimale de taille de fichier numérique, une table de quantification, dans l'ensemble de tables de quantification préalablement mémorisées, dont la qualité de compression est supérieure d'un niveau par rapport au niveau de qualité de compression de la table de quantification utilisée pour capturer l'image considérée ; dans ce cas, l'étape d'ajustement peut par exemple intervenir uniquement lorsque les tailles des fichiers numériques correspondant à deux images consécutives de l'ensemble d'images capturées automatiquement sont inférieures à la valeur seuil minimale.
- un intervalle de temps entre deux images successives de l'ensemble d'images capturées automatiquement est compris entre 150 millisecondes et 500 millisecondes.
- une image est automatiquement capturée uniquement si un ajustement de l'exposition n'est pas en cours.
- la valeur seuil maximale de taille de fichier numérique est 56 kilo-octets ; la valeur seuil minimale de taille de fichier numérique est 28 kilo-octets .
- le dispositif intégrant l'appareil photographique numérique est un téléphone mobile.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, un algorithme illustrant d'une façon générale le procédé selon l'invention ;
- à la figure 2, un algorithme illustrant un exemple particulier de mise en oeuvre du procédé selon l'invention.

### DESCRIPTION DES FORMES DE REALISATION PREFEREES DE L'INVENTION

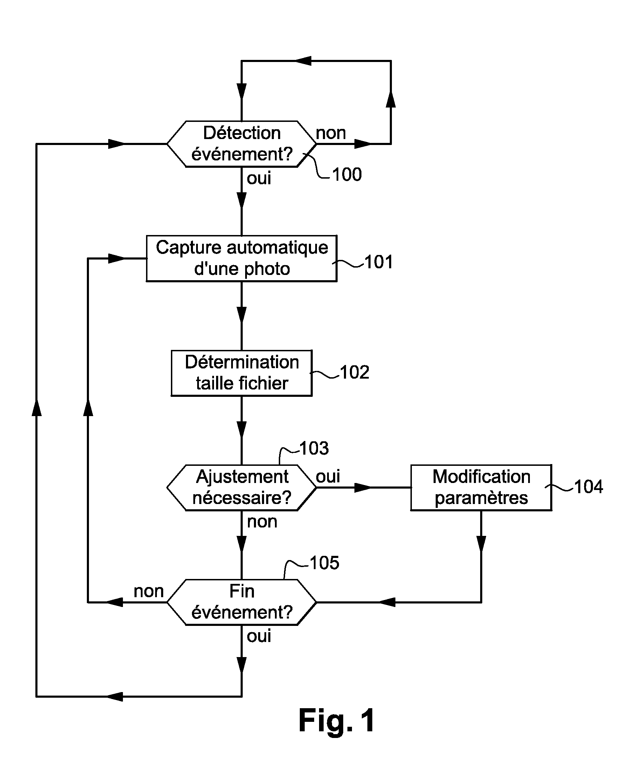

Dans la suite du document, l'invention est décrite, à titre d'exemple uniquement, dans le cas où le procédé est mis en oeuvre avec un dispositif de type téléphone mobile. A la figure 1, une première étape 100 intervenant dans le procédé selon l'invention est constituée par une étape de décision dans laquelle on cherche à détecter un événement particulier sur le dispositif incorporant l'appareil photographique numérique. L'événement particulier à détecter est de préférence un événement qui peut laisser supposer que l'utilisateur s'apprête à prendre une photo. Cet événement peut être la sélection, dans un menu du dispositif, visible par exemple sur un écran LCD, d'un mode de prise de photos, activant éventuellement différentes fonctionnalités de l'appareil photographique numérique, par exemple l'affichage sur l'écran LCD de ce qui est perçu par l'objectif. L'événement peut également être l'ouverture ou le retrait d'un cache obturateur de l'objectif de l'appareil photographique numérique ; un capteur approprié est alors prévu à cet effet. L'événement peut encore être, par exemple, la détection d'une légère pression sur un déclencheur de l'appareil photographique numérique, indiquant que l'utilisateur est en train d'effectuer une mise au point de la photo qu'il souhaite prendre.

Tant que l'événement particulier n'est pas détecté, le procédé selon l'invention n'évolue pas. Une fois l'événement particulier détecté, une étape 101 intervient. Elle consiste à réaliser automatiquement une capture de photo au moyen de l'équipement photographique du téléphone mobile. Par capture automatique, on désigne le fait que l'appareil photo numérique prend une photo sans l'intervention de l'utilisateur. La capture d'images est donc réalisée à son insu. La capture d'une photo ne peut être réalisée que dans un format compressé, typiquement le format JPEG, et à la volée. Compte tenu des limitations en mémoire, il n'est à aucun moment possible d'accéder à la totalité de la photo dans un format non compressé. Les données relatives à l'image capturée sont compressées au moyen d'un algorithme de codage ; elles constituent un fichier électronique intermédiaire qui est temporairement mémorisé dans une mémoire vive du téléphone mobile. Selon les modes de mise en oeuvre du procédé selon l'invention, on peut choisir ou non de visualiser la dernière image capturée sur l'écran de contrôle LCD.

Une fois le fichier électronique intermédiaire créé, on détermine, dans une étape 102, la taille de ce fichier en évaluant la place qu'il occupe dans la mémoire vive. Une étape de décision 103 intervient alors dans laquelle on détermine si un ajustement des opérations de compression est nécessaire. D'une façon générale, on décide qu'un ajustement est nécessaire au moins lorsque la taille du fichier électronique qui vient d'être créé est supérieure à une valeur maximale de taille de fichier préalablement déterminée. Dans d'autres modes de mise en oeuvre du procédé selon l'invention, un ajustement peut également être effectué lorsque la taille du fichier électronique qui vient d'être créé est inférieure à une valeur minimale de taille de fichier préalablement déterminée.

Dans le cas où un ajustement a été jugé nécessaire, on procède, dans une étape 104, à une modification de paramètres intervenant dans la prise de photographie. Ces paramètres peuvent par exemple être des valeurs utilisées dans des tables de quantification. Chaque table de quantification comporte un ensemble de valeurs correspondant à des règles de codage qui aboutissent à des opérations de compression plus ou moins sévères, comme expliqué précédemment. Plus une opération de compression est sévère, plus la taille du fichier résultant est réduite, et plus la qualité de l'image capturée est altérée lors de sa restitution. En changeant la table de quantification utilisée pour la compression, on change donc, pour une même image capturée, la taille du fichier résultant.

Dans le procédé selon l'invention, on propose donc, pour réaliser l'opération d'ajustement, de changer la table de quantification intervenant dans l'opération de compression. A cet effet, on a préalablement mémorisé dans un module de mémoire du téléphone mobile, un ensemble de tables de quantification. Chaque table de quantification correspond à un niveau de qualité de compression particulier. Dans un exemple particulier, on choisit de mémoriser sept tables de quantification distinctes. Les sept tables de quantification sont conçues pour avoir les niveaux de qualité suivants, sur une échelle de niveau de qualité variant de 0 (qualité basse) à 100 (haute qualité): 10 ;20 ;40 ;55 ;75 ;85 ;90. Une augmentation d'un niveau de qualité correspond, par exemple, à une transition du niveau 40 vers le niveau 55. Une diminution de deux niveaux de qualité correspond, par exemple, à une transition du niveau 75 vers le niveau 40.

Dans d'autres exemples de mise en oeuvre du procédé selon l'invention, le paramètre modifié pour une opération d'ajustement est le nombre de cellules actives du capteur de l'équipement photographique. Par exemple, lorsque des fichiers de taille trop importante sont créées, on désactive certaines cellules du capteur, afin de limiter le nombre d'informations à compresser.

Une fois la modification de paramètres achevée, ou lorsqu'aucune opération d'ajustement n'a été effectuée, une étape de décision 105 intervient, dans laquelle on détecte si l'événement qui a entraîné la capture d'une image a été annulé (fermeture de l'obturateur, relâchement du déclencheur, sortie du mode de prise de photos...). Si c'est le cas, le procédé est repris à l'étape de décision 100. Si ce n'est pas le cas, le procédé est repris à l'étape 101, où une nouvelle image est automatiquement capturée, donnant naissance à un nouveau fichier numérique intermédiaire élaboré avec une nouvelle table de quantification si une telle table a été désignée lors de la précédente étape de modifications de paramètres. Le nouveau fichier numérique est également mémorisé dans la mémoire vive du téléphone mobile, en effaçant le précédent fichier temporaire mémorisé.

Le procédé selon l'invention est d'autant plus efficace que la fréquence de capture automatique d'images est élevée. Dans un exemple de mise en oeuvre, on prévoit de capturer automatiquement des images toutes les 150 millisecondes. En cas d'utilisation des ressources du téléphone mobile pour d'autres fonctionnalités, la périodicité de la capture automatique d'images peut atteindre 500 millisecondes.

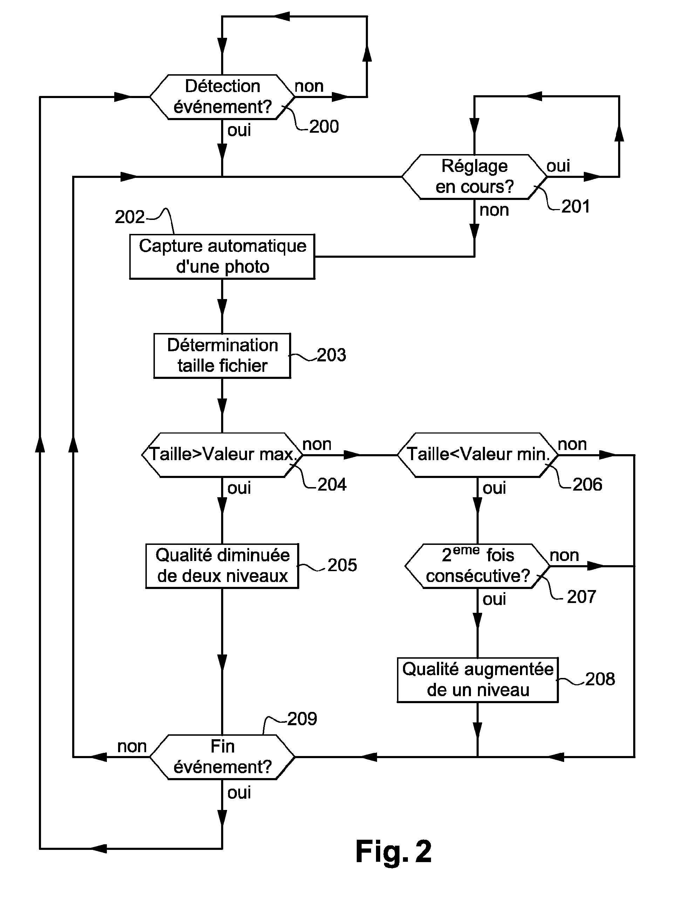

A la figure 2, où un organigramme illustrant un mode de mise en oeuvre particulier du procédé selon l'invention est représenté, une première étape de décision 200 correspond à la première étape 100 décrite à la figure 1. Elle est suivie, lorsqu'un événement particulier a été détecté, d'une étape de décision 201, dans laquelle on vérifie que l'équipement photographique n'est pas en train d'effectuer un réglage de l'exposition. Tant qu'un tel réglage est en cours, aucune capture d'image n'est effectuée. En effet, la capture d'une image sous-exposée ou sur-exposée produirait un fichier numérique dont la taille différerait sensiblement de la taille de la même image correctement exposée, et la détermination des bons paramètres pour obtenir une taille de fichier optimale lors de la prise d'une photographie s'en trouverait ralentie, parfois fortement.

Dès que le réglage de l'exposition n'est plus actif, on procède, dans une étape 202 semblable à l'étape 101 de la figure 1, à la capture automatique d'une photo, puis, dans une étape 203 semblable à l'étape 102 de la figure 1, à la détermination de la taille du fichier temporaire créé.

Les étapes 103 et 104 de la figure 1 correspondent, dans le cadre de l'exemple illustré, aux étapes 204, 205, 206 , 207 et 208. L'étape de décision 204, qui fait suite à l'étape de détermination de la taille du fichier temporaire 203, consiste à comparer la taille du fichier numérique temporaire créé à une valeur maximale. La valeur maximale choisie est de préférence légèrement inférieure à l'espace effectivement disponible dans chaque compartiment de la mémoire servant à mémoriser les photographies qui seront prises par l'utilisateur. Dans un exemple particulier, la valeur maximale retenue est 56 kilo-octets.

Si la taille du fichier numérique temporaire créé est supérieure à la valeur maximale, alors le niveau de qualité de compression est diminué, dans une étape 205, de deux niveaux selon le mécanisme précédemment expliqué. Sinon, on procède, dans une étape de décision 206, à une comparaison entre la taille du fichier numérique temporaire créé à une valeur minimale. Si la taille du fichier numérique temporaire créé est inférieure à la valeur minimale, et que cet état est vérifié, dans une étape de décision 207, pour deux fichiers temporaires consécutivement créés, alors le niveau de qualité de compression est augmenté, dans une étape 208 d'un niveau selon le mécanisme précédemment expliqué. Dans un exemple particulier, la valeur minimale retenue est 28 kilo-octets.

A l'issue des étapes de diminution de niveau de qualité de compression 205, d'augmentation de niveau de qualité de compression 208, ou à l'issue des étapes de décision 206 ou 207 lorsque la taille du fichier temporaire n'est pas inférieure pour la deuxième fois consécutive à la valeur minimale, on procède à une étape de décision 209, semblable à l'étape 105 de la figure 1, pour déterminer si l'événement qui a entraîné la capture d'une image a été annulé. Si c'est le cas, le procédé est repris à l'étape de décision 200. Si ce n'est pas le cas, le procédé est repris à l'étape de décision 201, où on attend que le réglage de l'exposition ne soit plus en cours avant de procéder à la capture automatique d'une nouvelle image.

Le procédé tel qu'illustré à la figure 2 répond donc à deux objectifs ordonnés : tout d'abord, la taille des fichiers numériques intermédiaires créés suite à la capture automatique d'une image doit être dès que possible et le plus souvent possible inférieure à une valeur seuil maximale donnée ; ensuite, la qualité de l'encodage doit être la plus élevée possible dans la limite du premier objectif. La diminution de qualité est donc favorisée par rapport à son augmentation puisque la diminution est toujours réalisée par deux niveaux (sauf bien sur lorsque l'avant dernier ou le dernier niveau de qualité de compression sont atteints), tandis que l'augmentation de qualité n'est réalisées que degré par degré, et seulement si la condition de transition se maintient deux fois consécutivement. Tout mécanisme répondant à ce double objectif peut être employé dans le procédé selon l'invention.

La prise d'une photographie par l'utilisateur interrompt le déroulement du procédé décrit aux figures 1 ou 2. Ce dernier est ultérieurement repris aux étapes de décision 100 ou 200 consistant en la détection d'un événement particulier. La photo prise par un utilisateur donne naissance à un fichier numérique dont l'opération de compression a fait appel aux derniers paramètres utilisés avec les images capturées automatiquement, par exemple la dernière table de quantification sélectionnée. L'utilisateur est d'une part ainsi certain de respecter les limites structurelles et fonctionnelles de taille des compartiments du module mémoire utilisé, et d'autre part d'obtenir une qualité optimale pour l'espace mémoire disponible.

## Revendications

1. Procédé de gestion de la prise de photographies numériques au moyen d'un dispositif intégrant notamment un appareil photographique numérique, **caractérisé en ce que** le procédé comporte les différentes étapes consistant à :
- détecter (100 ;200) un événement particulier subi par le dispositif laissant supposer qu'un utilisateur du dispositif s'apprête à prendre une photographie;
- capturer (101 ;202) automatiquement une succession d'images au moyen de l'appareil photographique numérique intégré dans le dispositif;
- pour chaque image automatiquement capturée, déterminer (102 ;203) une taille d'un fichier numérique correspondant à l'image capturée considérée, et ajuster (103 ;104), en fonction au moins d'une valeur seuil maximale de taille de fichier numérique, un ensemble de paramètres intervenant sur la taille des fichiers numériques créés suite à la capture d'une image, pour la capture d'une image suivante.

2. Procédé selon la revendication précédente **caractérisé en ce que** l'événement particulier détecté est une opération de sélection, au sein du dispositif considéré, d'un mode de prise de photographies.

3. Procédé selon la revendication 1 **caractérisé en ce que** l'événement particulier détecté est une opération d'ouverture d'un cache obturateur d'un capteur de l'appareil photographique numérique.

4. Procédé selon la revendication 1 **caractérisé en ce que** l'événement particulier détecté est une pression sur un déclencheur de l'appareil photographique numérique pour effectuer une mise au point.

5. Procédé selon l'une au moins des revendications précédentes **caractérisé en ce que** les paramètres ajustés sont des valeurs intervenant dans des tables de quantification utilisées dans une opération de compression pour créer un fichier numérique à partir de chaque photographie prise.

6. Procédé selon la revendication précédente **caractérisé en ce que** l'étape d'ajustement de l'ensemble de paramètres intervenant sur la taille des fichiers numériques créés suite à la capture automatique d'une image comporte une opération de changement de table de quantification, ladite opération consistant à choisir une autre table de quantification, parmi un ensemble de tables de quantification préalablement mémorisées dans le dispositif, que celle utilisée pour capturer l'image considérée, chaque table de quantification correspondant à un niveau de qualité de compression particulier.

7. Procédé selon la revendication précédente **caractérisé en ce que** l'ensemble des tables de quantification préalablement mémorisées est constitué de sept tables de quantification distinctes.

8. Procédé selon l'une au moins des revendications 6 ou 7 **caractérisé en ce que** l'étape d'ajustement de l'ensemble de paramètres intervenant sur la taille des fichiers numériques créés suite à la capture automatique d'une image consiste à choisir (205), lorsque la taille du fichier numérique correspondant à l'image considérée est supérieure à la valeur seuil maximale de taille de fichier numérique, une table de quantification, dans l'ensemble de tables de quantification préalablement mémorisées, dont la qualité de compression est inférieure de deux niveaux par rapport au niveau de qualité de compression de la table de quantification utilisée pour capturer automatiquement l'image considérée.

9. Procédé selon l'une au moins des revendications 6 à 8 **caractérisé en ce que** l'étape d'ajustement de l'ensemble de paramètres intervenant sur la taille des fichiers numériques créés suite à la capture automatique d'une image consiste à choisir (208), lorsque la taille du fichier numérique correspondant à l'image considérée est inférieure à une valeur seuil minimale de taille de fichier numérique, une table de quantification, dans l'ensemble de tables de quantification préalablement mémorisées, dont la qualité de compression est supérieure d'un niveau par rapport au niveau de qualité de compression de la table de quantification utilisée pour capturer automatiquement l'image considérée.

10. Procédé selon la revendication précédente **caractérisé en ce que** l'étape d'ajustement intervient uniquement lorsque les tailles des fichiers numériques correspondant à deux images consécutives de l'ensemble d'images capturées automatiquement sont inférieures à la valeur seuil minimale.

11. Procédé selon l'une au moins des revendications précédentes
**caractérisé en ce que** la valeur seuil maximale de taille de fichier numérique est 56 kilo-octets.

12. Procédé selon l'une au moins des revendications 9 à 11 **caractérisé en ce que** la valeur seuil minimale de taille de fichier numérique est 28 kilo-octets.

13. Procédé selon l'une au moins des revendications précédentes **caractérisé en ce que** un intervalle de temps entre deux images successives de l'ensemble d'images capturées automatiquement est compris entre 150 millisecondes et 500 millisecondes.

14. Procédé selon l'une au moins des revendications précédentes **caractérisé en ce que** une image est automatiquement capturée uniquement si un ajustement de l'exposition n'est pas en cours.

15. Procédé selon l'une au moins des revendications précédentes **caractérisé en ce que** le dispositif intégrant l'appareil photographique numérique est un téléphone mobile.
